# EUROPEAN PATENT APPLICATION

(11) **EP 4 671 886 A1**
(43) Date of publication of application: **31.12.2025**
(21) Application number: 25184807.3
(22) Date of filing: 24.06.2025
(51) Int. Cl.: G05B 19/042, G05B 19/05, G05B 19/418

(54) **INFORMATION PROCESSING APPARATUS, INFORMATION PROCESSING METHOD, AND INFORMATION PROCESSING PROGRAM**

(30) Priority: 27.06.2024 JP 2024104344
(71) Applicant: Yokogawa Electric Corporation, Tokyo 180-8750 (JP)
(72) Inventor: TOINAGA, Takeshi, Musashino-shi, Tokyo, 180-8750 (JP); YOSHIDA, Yoshitaka, Musashino-shi, Tokyo, 180-8750 (JP)
(74) Representative: Winter, Brandl - Partnerschaft mbB

(57) **Abstract**

A management server (10) receives an information model obtained by structuring information on a system, collects device information on each controller (30) that executes control on the system from each controller (30), and generates an import file enabling creation of a function block corresponding to each controller (30) based on the received information model and the collected device information.

## Description

### FIELD

The present disclosure relates to an information processing apparatus, an information processing method, and an information processing program.

### BACKGROUND

Processes for manufacturing various types of products are automated by introducing an automation system to a plant. When a project that relates to the automation system is carried out, engineering, such as designing, construction, and examination, is performed based on designing information that is received from a customer (see, for example, Japanese Patent No. 4186383).

It is however difficult to perform engineering that relates to function blocks (FB) of the automation system efficiently. For example, in a conventional technique, it is difficult to automatically arrange a function block that is a plant control application in each controller forming the automation system.

The present disclosure was made in view of the above-described circumstances and an object of the present disclosure is to perform engineering that relates to function blocks of an automation system efficiently.

### SUMMARY

According to an aspect of the embodiments, an information processing device includes a receiver that receives an information model obtained by structuring information on a system, a collecting unit that collects device information on each controller that executes control on the system from the each controller, and a generator that generates an import file enabling creation of a function block corresponding to the each controller based on the received information model and the collected device information.

According to an aspect of the embodiments, an information processing method of executing, by a computer, a process includes receiving an information model obtained by structuring information on a system, collecting device information on each controller that executes control on the system from the each controller, and generating an import file for creation of a function block corresponding to the each controller based on the received information model and the collected device information.

According to an aspect of the embodiments, an information processing program that causes a computer to execute a process includes receiving an information model obtained by structuring information on a system, collecting device information on each controller that executes control on the system from the each controller, and generating an import file for creation of a function block corresponding to the each controller based on the received information model and the collected device information.

### BRIEF DESCRIPTION OF THE DRAWINGS

FIG. 1 is a diagram illustrating an example of a configuration of an automation system according to an embodiment;
FIG. 2 is a block diagram illustrating an example of a configuration of each device of the automation system according to the embodiment;
FIG. 3 is a diagram illustrating an example of a model storage unit of a management server according to the embodiment;
FIG. 4 is a diagram illustrating an example of a device information storage unit of the management server according to the embodiment;
FIG. 5 is a diagram illustrating an example of an import file storage unit of the management server according to the embodiment;
FIG. 6 is a sequence chart illustrating an example of a flow of an entire automation system according to the embodiment; and
FIG. 7 is a diagram illustrating an example of a hardware configuration according to the embodiment.

### DETAILED DESCRIPTION OF THE PREFERRED EMBODIMENTS

An information processing apparatus, an information processing method, and an information processing program according to an embodiment of the present disclosure will be described below with reference to the accompanying drawings. Note that the embodiments described below do not limit the present disclosure.

A configuration of and a process performed by an automation system 100 according to the embodiment, a configuration of and a process performed by each device of the automation system 100, and a flow of the process performed by the automation system 100 will be described in order and an effect of the embodiment will be described at the end.

### 1. Configuration of and Process performed by Automation System 100

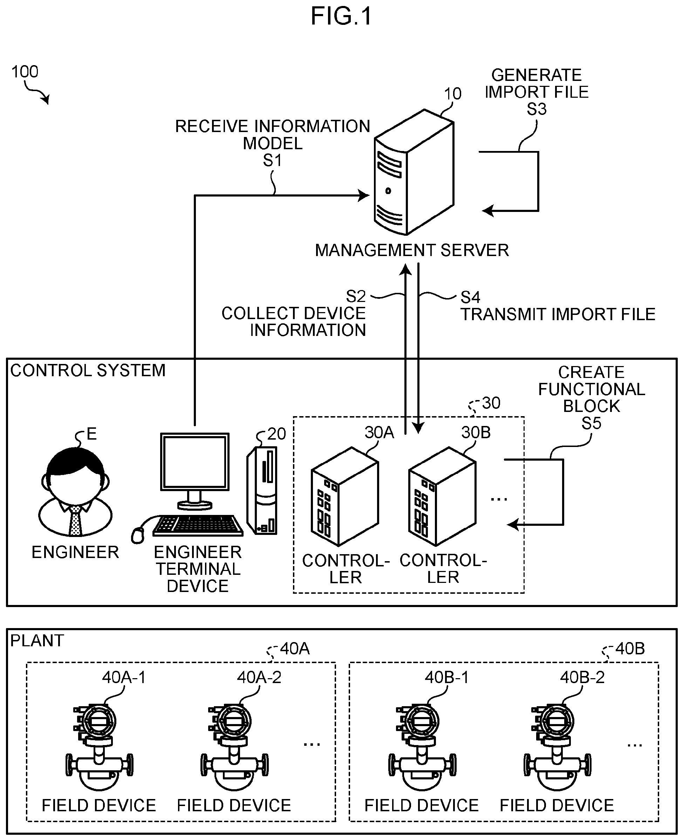

Using FIG. 1, the configuration and the process performed by the automation system 100 according to the embodiment will be described. FIG. 1 is a diagram illustrating an example of the configuration of the automation system 100 according to the embodiment. An example of an entire configuration of the automation system 100, an example of the entire process performed by the automation system 100, and an effect of the automation system 100 will be described below. Note that, in the embodiment, factory production remote monitoring using plant devices that are devices set in a plant is exemplified and described; however, this does not limit devices of subject and the field of use and the system is also applicable to environmental measurement remote monitoring, such as power monitoring, wind power generation, water and sewage monitoring, and river monitoring.

### 1-1. Example of Entire Configuration of Automation System 100

The automation system 100 includes a management server 10 that is the information processing apparatus, an engineer terminal device 20 that is a manager terminal device, a controller 30 (30A, 30B,...), and a field device 40 (40A and 40B). The management server 10, the engineer terminal device 20, the controller 30, and the field device 40 are connected such that they are able to communicate with one another via a given communication network (not illustrated in the drawing). It is possible to employ various types of communication networks, such as the Internet and a dedicated line, as the given communication network.

### 1-1-1. Management Server 10

The management server 10 is the information processing apparatus that manages at least one control system. For example, a GDS (Global Discovery Server) that manages a control system according to OPC UA (Open Platform Communications Unified Architecture), a HTTP (Hypertext Transfer Protocol) server having a client function of OPC UA, or the like, enables the management server 10. Note that the automation system 100 illustrated in FIG. 1 may include a plurality of the management servers 10. Note that a cloud environment, an on-premise environment, an edge environment, or the like, may enable the management server 10.

The control system is a system that controls a process in the plant and is formed of the engineer terminal device 20, the controller 30, and the field device 40. For example, a distributed control node (DCN) that is a controller, a group of devices that controls the DCN, and a group of devices that is controlled by the DCN enable the control system. The example in FIG. 1 includes a control system that controls the process in the plant. The plant is, for example, an oil, petrifaction, gas, ferrous or non-ferrous, chemical, power, or food and medicine production facility.

### 1-1-2. Engineer Terminal Device 20

The engineer terminal device 20 is a manager terminal device that an engineer E who is a plant manager uses. In the example in FIG. 1, the case where a desktop personal computer (PC) enables the engineer terminal device 20 is illustrated; however, a laptop PC, a smartphone, or the like, may enable the engineer terminal device 20. The automation system 100 illustrated in FIG. 1 may include a plurality of the engineer terminal devices 20.

### 1-1-3. Controller 30

The controller 30 is a plant device that controls a plurality of the field devices 40 forming the plant. For example, the controller enables the controller 30. The controller 30 is managed by the engineer E. In the example in FIG. 1, the controller 30 (30A, 30B,...) forming the control system is managed by the engineer E.

### 1-1-4. Field Device 40

The field device 40 is a plant device forming the plant. For example, measurement devices, such as a temperature sensor, a pressure sensor, and a flow sensor, and an operational device, such as an actuator, enable the field device 40. In the example in FIG. 1, the field device 40A forming the plant includes field devices 40A-1, 40A-2,... and is controlled by the controller 30A. The field device 40B forming the plant includes field devices 40B-1, 40B-2,... and is controlled by the controller 30B.

### 1-2. Example of Entire Process performed by Automation System 100

An entire process performed by the automation system 100 described above will be described. Note that it is also possible to execute the processes of steps S1 to S5 described below in a different order. There may be a process to be omitted among the processes of steps S1 to S5 described below.

### 1-2-1. Information Model Receiving Process

First of all, the management server 10 receives and saves an information model from the engineer terminal device 20 (step S1). For example, the management server 10 receives an information model that is an OPC UA information model of each control system and that indicates a list of function blocks that are defined on engineering from the engineer terminal device 20.

The information model is information obtained by structuring information on the plant and, for example, is information containing function block information on function blocks usable in the control system (example: types and the number of function blocks) and input-output information on a setting for inputs and outputs in the control system (example: types and the number of input-output settings).

### 1-2-2. Device Information Collecting Process

Secondly, the management server 10 collects device information from the controller 30 (step S2). For example, the management server 10 collects device information on the controller 30A from the controller 30A and saves the device information. The management server 10 collects device information on the controller 30B from the controller 30B and saves the device information.

The device information is information on the controller 30 and is hardware information on hardware, software information on software, function block type information on the types of the function blocks, etc.

### 1-2-3. Import File Generating Process

Thirdly, the management server 10 generates an import file (step S3). For example, using the information model and the device information, the management server 10 generates an import file for creating a function block corresponding to each controller 30 and saves the import file. When the controller 30A has both an arithmetic function and an input-output data transmitting-receiving function, the management server 10 generates an import file for creating function blocks on arithmetic setting and input-output data transmitting-receiving setting. When the controller 30B has only the arithmetic function, the management server 10 generates an import file for creating a function block on an arithmetic setting.

### 1-2-4. Import File Transmitting Process

Fourthly, the management server 10 transmits the import file to the controller 30 (step S4). For example, the management server 10 transmits an import file for function blocks (example: an arithmetic setting and an input-output data transmitting-receiving setting) that the controller 30A is able to create to the controller 30A. The management server 10 transmits an import file for a function block (example: an arithmetic setting) that the controller 30B is able to create to the controller 30B.

When the engineer terminal device 20 is online, the management server 10 transmits the import file to the controller 30 at the timing of generation of the import file. On the other hand, when the engineer terminal device 20 is offline, the management server 10 acquires a saved import file at freely-selected timing and transmits the import file to the controller 30.

### 1-2-5. Function Block Creating Process

Fifthly, the controller 30 generates the function blocks (step S5). For example, the controller 30A reads the import file that is received from the management server 10 and creates function blocks on arithmetic setting and input-output data transmitting-receiving setting. The controller 30B reads the import file that is received from the management server 10 and creates a function block on arithmetic setting.

### 1-3. Effect of Automation System 100

A problem in an automation system 100P according to a reference technology will be described and then an effect of the automation system 100 will be described below.

### 1-3-1. Problem in Automation System 100P

In the automation system 100P, the engineer E defines function blocks on an engineering tool of the engineer terminal device 20, thereby arranging the function blocks in the controller 30. The engineer E has to know the performance and the resource of each controller 30. When the configuration of the control system is changed, the engineer E has to consider arrangement of function blocks again and this leads to an increase in the number of steps of engineering.

### 1-3-2. Overview of Automation System

In the automation system 100, the following process is executed. First of all, the management server 10 receives an information model of OPC UA from the engineer terminal device 20. Secondly, the management server 10 collects device information containing hardware information and software information from each controller 30. Thirdly, using the information model and the device information, the management server 10 generates an import file corresponding to a function of each controller 30. Fourthly, the management server 10 transmits the generated import file to each controller 30. Fifthly, each controller 30 reads the import file and generates an executable function block.

In the automation system 100, when the engineer terminal device 20 is online, the management server 10 creates a function block at the timing of generation of the import file and, when the engineer terminal device 20 is offline, the management server 10 creates a function block at freely-selected timing.

### 1-3-3. Effect of Automation System 100

The automation system 100 has the following effect. First of all, the automation system 100 makes it possible to arrange optimum function blocks according to the hardware information and the software information on the controller 30. Secondly, the automation system 100 makes it possible to arrange or change optimum function blocks when the engineer terminal device 20 does not have the function of arranging function blocks. Thirdly, the automation system 100 makes it possible to detect a change of the controller 30 and rearrange function blocks automatically also when the engineer terminal device 20 is offline while the plant is being in operation. Fourthly, because of use of the information model according to OPC UA that is a standard, the automation system 100 makes it possible to arrange function blocks without depending on a vender.

As described above, the automation system 100 makes it possible to efficiently perform engineering that relates to function blocks of the automation system.

### 2. Configuration of and Process performed by each Device of Automation System 100

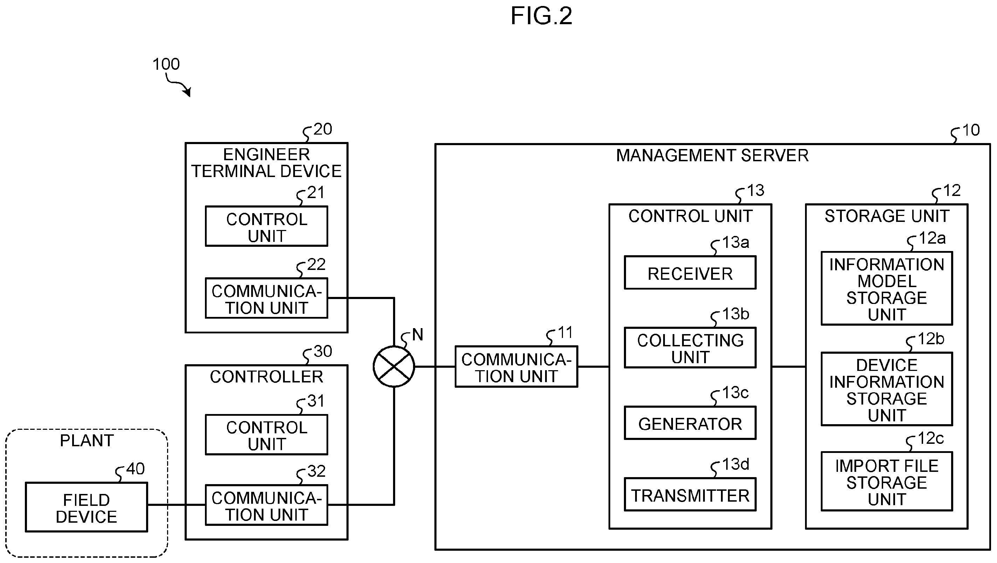

Using FIG. 2, a configuration of and a process performed by each device that the automation system 100 illustrated in FIG. 1 includes will be described. FIG. 2 is a block diagram illustrating an example of a configuration of each device of the automation system 100 according to the embodiment. The example of the entire configuration of the automation system 100 according to the embodiment will be described and then examples of a configuration of and a process performed by the management server 10, examples of a configuration of and a process performed by the engineer terminal device 20, examples of a configuration of and a process performed by the controller 30, and examples of a configuration of and a process performed by the field device 40 will be described below.

### 2-1. Example of Entire Configuration of Automation System 100

Using FIG. 2, the example of the entire configuration of the automation system 100 illustrated in FIG. 1 will be described. As illustrated in FIG. 2, the automation system 100 includes the management server 10 that is the information processing apparatus, the engineer terminal device 20, the controller 30, and the field device 40. The management server 10, the engineer terminal device 20, the controller 30, and the field device 40 are connected via a network N that the Internet, a dedicated line, or the like, enables such that they are able to communicate with each other.

A cloud environment, an on-premise environment, an edge environment, or the like, may enable the management server 10. The engineer terminal device 20, the controller 30, and the field device 40 form the control system that controls the system. The system here is, for example, a plant. The controller 30, for example, executes control on the plant. The field device 40, for example, is set at the site of the plant.

The controller 30 accords with OPA (Open Process Automation), MTP (Module Type Package), or NOA (NAMUR Open Architecture) that is a standard.

The controller 30, for example, accords with OPC UA that is a standard.

### 2-2. Examples of Configuration of and Process performed by Management Server 10

Using FIG. 2, examples of the configuration of and the process performed by the management server 10 will be described. The management server 10 is the information processing apparatus and includes a communication unit 11, a storage unit 12, and a control unit 13. Note that the management server 10 may include an input unit (example: a keyboard, a mouse, or the like) that receives various types of operations from the manager of the management server 10 and a display unit (example: a liquid crystal display, or the like) for displaying various types of information.

### 2-2-1. Communication Unit 11

The communication unit 11 controls data communication with other devices. For example, the communication unit 11 performs data communication with each communication device via a router, or the like. The communication unit 11 is able to perform data communication with a terminal device of an operator (not illustrated in the drawings).

### 2-2-2. Storage Unit 12

The storage unit 12 stores various types of information that is referred to when the control unit 13 operates and various types of information that is acquired when the control unit 13 operates. The storage unit 12 includes an information model storage unit 12a, a device information storage unit 12b, and an import file storage unit 12c. For example, a semiconductor memory device, such as a random access memory (RAM) or a flash memory, or a storage device, such as a hard disk or an optical disk, enables the storage unit 12. In the example in FIG. 2, the storage unit 12 is set in the management server 10; however, the storage unit 12 may be set outside the management server 10 and a plurality of storage units may be set.

### 2-2-2-1. Information Model Storage Unit 12a

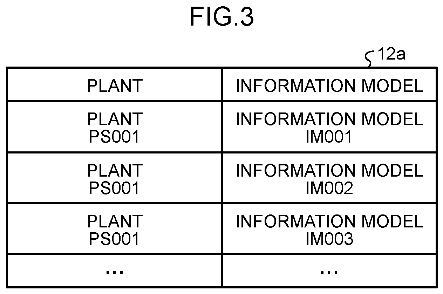

The information model storage unit 12a stores an information model. For example, the information model storage unit 12a stores an information model that is received by a receiver 13a of the control unit 13 to be described below. Using FIG. 3, an example of data that the information model storage unit 12a stores will be described here. FIG. 3 is a diagram illustrating an example of the information model storage unit 12a of the management server 10 according to the embodiment. In the example in FIG. 3, the information model storage unit 12a has items of "planet" and "information model".

"Plant" represents identification information for identifying the plant that is the system and is, for example, an identification number of an identification symbol of the plant. "Information model" is information obtained by structuring information on the system and is, for example, information that is created in a form according to OPC UA containing the function block information on function blocks usable in the control system of the plant (example: types and the number of function blocks) and the input-output information on a setting for inputs and outputs in the control system of the plant (example: types and the number of input-output settings).

In other words, FIG. 3 illustrates an example where data of {plant: "plant PS001", information model: "information model IM001"}, {plant: "plant PS001", information model: "information model IM002"}, {plant: "plant PS001", information model: "information model IM003"},... is stored in the information model storage unit 12a.

### 2-2-2-2. Device Information Storage Unit 12b

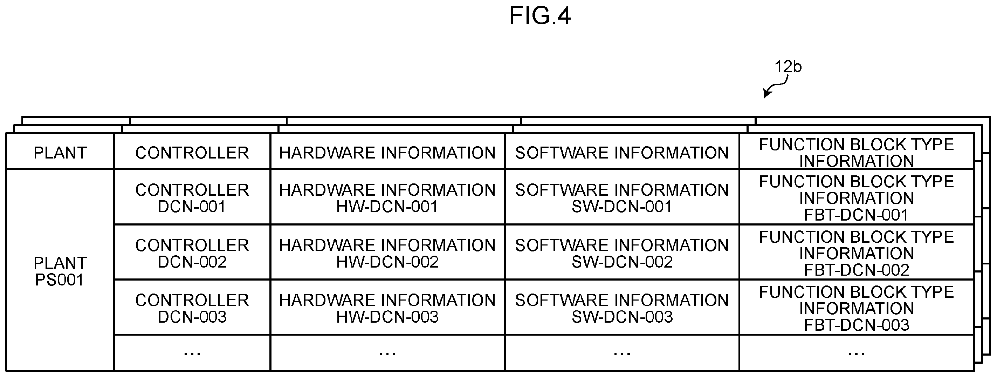

The device information storage unit 12b stores device information. For example, the device information storage unit 12b stores the device information that is collected by a collecting unit 13b of the control unit 13 to be described below. Using FIG. 4, an example of data that the device information storage unit 12b stores will be described here. FIG. 4 is a diagram illustrating an example of the device information storage unit 12b of the management server 10 according to the embodiment. In the example in FIG. 4, the device information storage unit 12b has items of "plant", "controller", "hardware information", "software information", and "function block type information".

"Plant" represents identification information for identifying the plant that is the system and is, for example, an identification number of an identification symbol of the plant. "Control Device" represents identification information for identifying the controller 30 that is the plant device and is, for example, an identification number of an identification symbol of the controller 30. "Hardware information" is information on hardware of the controller 30 and is, for example, a memory capacity, a CPU (Central Processing Unit) processing performance, a communication band, etc., of the controller 30. "Software information" is information on software of the controller 30 and is, for example, information on a processing load on and an execution environment, such as an operating system (OS), of the controller 30. "Function block type information" is information on a type of a function block usable by the controller 30 and is, for example, information on executable processing, such as the arithmetic function and the input-output data transmitting-receiving function.

In other words, as for a plant that is identified by "plant PS001", FIG. 4 illustrates an example where data of {controller: "controller DCN-001", hardware information: "hardware information HW-DCN-001", software information: "SW-software information DCN-001", function block type information: "function block type information FBT-DCN-001"}, {controller: "controller DCN-002", hardware information: "hardware information HW-DCN-002", software information: "SW-software information DCN-002", function block type information: "function block type information FBT-DCN-002"}, {controller: "controller DCN-003 ", hardware information: "hardware information HW-DCN-003", software information: "SW-software information DCN-003", function block type information: "function block type information FBT-DCN-003"},... is stored in the device information storage unit 12b.

### 2-2-2-3. Import File Storage Unit 12c

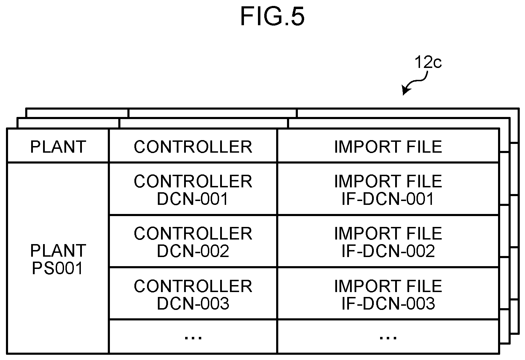

The import file storage unit 12c stores the import file. For example, the import file storage unit 12c stores an import file that is generated by a generator 13c of the control unit 13 to be described below. Using FIG. 5, an example of data that the import file storage unit 12c stores will be described. FIG. 5 is a diagram illustrating an example of the import file storage unit 12c of the management server 10 according to the embodiment. In the example in FIG. 5, the import file storage unit 12c has items of "plant", "controller" and "import file".

"Plant" represents identification information for identifying the plant that is the system and is, for example, an identification number of an identification symbol of the plant. "Control Device" represents identification information for identifying the controller 30 that is the plant device and is, for example, an identification number of an identification symbol of the controller 30. "Import file" is a file for creating a function block of the controller 30 and is, for example, an execution file that is read by the controller 30 to set a function block.

In other words, as for the plant that is identified by "plant PS001", FIG. 5 illustrates an example where data of {controller: "controller DCN-001", import file:"import file IF-DCN-001"}, {controller: "controller DCN-002", import file: "import file IF-DCN-002"}, {controller: "controller DCN-003", import file: "import file IF-DCN-003"},... is stored in the import file storage unit 12c.

### 2-2-3. Control Unit 13

The control unit 13 controls the entire management server 10. The control unit 13 includes the receiver 13a, the collecting unit 13b, and the generator 13c, and a transmitter 13d. For example, an electronic circuit, such as a CPU or a micro processing unit (MPU), or an integrated circuit, such as an application specific integrated circuit (ASIC) or a field programmable gate array (FPGA), can enable the control unit 13.

### 2-2-3-1. Receiver 13a

The receiver 13a receives various types of information. Note that the receiver 13a stores the received various types of information in the storage unit 12. The information model receiving process will be described below.

### Information Model Receiving process

The receiver 13a executes the information model receiving process. For example, the receiver 13a receives the information model on the system. The receiver 13a receives the information model containing at least one of the function block information on the function blocks of the system and the input-output information on the setting for inputs and outputs in the system from the engineer terminal device 20 that is the manager terminal device that the engineer E who is the manager of the system uses. The system herein is, for example, the plant.

A specific example will be described. The receiver 13a receives "information model IM002" containing function block information and input-output information on "plant PS001" from the engineer terminal device 20 of the engineer E of "control system CS001" at an initial setting in the controller 30 of "control system CS001" of "plant PS001" and stores "information model IM002" in the information model storage unit 12a.

### 2-2-3-2. Collecting Unit 13b

The collecting unit 13b collects various types of information. Note that the collecting unit 13b stores the collected various types of information in the storage unit 12. The device information collecting process will be described below.

### Device Information Collecting Process

The collecting unit 13b executes the device information collecting process. For example, the collecting unit 13b collects the device information on each controller 30 that executes control on the system from each controller 30. The collecting unit 13b collects the device information containing at least one of the hardware information on hardware of each controller 30, the software information on software of each controller 30, and the function block type information on the types of the function blocks of each controller 30 from each controller 30. The system here is, for example, the plant.

A specific example will be described. The collecting unit 13b collects {controller: "controller DCN-001", hardware information: "hardware information HW-DCN-001", software information: "SW-software information DCN-001", function block type information: "function block type information FBT-DCN-001"} as the device information on the controller 30A of "control system CS001" of "plant PS001" from the controller 30A and stores it in the device information storage unit 12b. The collecting unit 13b also collects {controller: "controller DCN-002", hardware information: "hardware information HW-DCN-002", software information: "SW-software information DCN-002", function block type information: "function block type information FBT-DCN-002"} as the device information on the controller 30B of "control system CS001" of "plant PS001" from the controller 30B and stores it in the device information storage unit 12b.

The collecting unit 13b may execute the device information collecting process at the timing of transmission of the information model by the engineer terminal device 20, may execute the device information collecting process at regular timing that is set for the engineer E, or may execute the device information collecting process at the timing of detection of a change in the control system (example: new connection, replacement or detachment of the controller 30).

### 2-2-3-3. Generator

The generator 13c generates various types of information. Note that the generator 13c stores the generated various types of information in the storage unit 12. The generator 13c outputs the generated various types of information to the transmitter 13d. An information model specifying process, a device information specifying process, and an import file generating process will be described below.

### Information Model Specifying Process

The generator 13c executes the information model specifying process. For example, the generator 13c specifies types and the number of function blocks usable in the control system from the function block information contained in the information model. The generator 13c also specifies types and the number of input-output settings that can be set in the control system from the input-output information contained in the information model.

A specific example of the information model specifying process will be described. First of all, the generator 13c refers to "information model IM001" of "plant PS001" as the information model that the information model storage unit 12a stores. Secondly, the generator 13c specifies a type of a function block "function block type FBT-PS001" usable in "plant PS001 ", the number of usable function blocks "number-of-function-blocks FBN-PS001", etc., from the referred "information model IM001". Thirdly, the generator 13c specifies a type of an input-output setting "input-output setting type IOT-PS001" that can be set in "plant PS001", the number of input-output settings "number-of-input-output-settings ION-PS001" that can be made from the referred "information model IMO01".

### Device Information Specifying Process

The generator 13c executes the device information specifying process. For example, the generator 13c specifies a memory capacity, a CPU processing performance, a communication band, etc., of the controller 30 from the hardware information contained in the device information. The generator 13c also specifies a processing load on and an execution environment, such as an OS, of the controller 30 from the software information. The generator 13c also specifies the arithmetic function, the input-output data transmitting-receiving function, etc., as functions executable by the controller 30 from the function block type information contained in the device information.

A specific example of the device information specifying process will be described. First of all, the generator 13c refers to "hardware information HW-DCN-001", "software information SW-DCN-001", and "function block type information FBT-DCN-001" on "controller DCN-001" of "plant PS001" as the device information that the device information storage unit 12b stores. The generator 13c also refers to "hardware information HW-DCN-001", "software information SW-DCN-002", and "function block type information FBT-DCN-002" on "controller DCN-002" of "plant PS001" as the device information that the device information storage unit 12b stores.

Secondly, the generator 13c specifies a memory capacity "memory capacity MC-DCN-001", a CPU processing performance "CPU processing performance PP-DCN-001", a communication band "communication band CB-DCN-001", etc., of "controller DCN-001" from the referred "hardware information HW-DCN-001" of "controller DCN-001". The generator 13c also specifies a memory capacity "memory capacity MC-DCN-002", a CPU processing performance "CPU processing performance PP-DCN-002", a communication band "communication band CB-DCN-002", etc., of "controller DCN-002" from the referred "hardware information HW-DCN-002" of "controller DCN-002".

Thirdly, the generator 13c specifies a processing load "processing load PL-DCN-001" on and an execution environment "execution environment EE-DCN-001" of "controller DCN-001", etc., from the referred "software information HW-DCN-001" of "controller DCN-001". The generator 13c also specifies a processing load "processing load PL-DCN-002" on and an execution environment "execution environment EE-DCN-002" of "controller DCN-002", etc., from the referred "software information HW-DCN-002" of "controller DCN-002".

Fourthly, the generator 13c specifies types of function blocks {function block type 1: "arithmetic function 1", function block type 2: "arithmetic function 2", function block type 3:"input-output data transmitting-receiving function"} of "controller DCN-001", and the like, from referred "function block type FBT-DCN-001" of "controller DCN-001". The generator 13c also specifies a type of a function block "controller DCN-002" {function block type 1: "arithmetic function 1"}, and the like, from referred "function block type FBT-DCN-002" of "controller DCN-002".

### Import File Generating Process

The generator 13c executes the import file generating process. For example, based on the received information model and the collected device information, the generator 13c generates an import file that enables creation of a function block corresponding to each controller 30. Using information on the function blocks of and input-output setting in the control system that is specified from the information model and the information on the hardware, software, and function block of each controller 30 that is specified from the device information, the generator 13c generates an import file that enables creation of a function block, such as the arithmetic function or the input-output-data transmitting-receiving function, corresponding to each controller 30.

A specific example of the import file generation process will be described. Using "function block type FBT-PS001", "function block number FBN-PS001", etc., that are specified with respect to "plant PS001" and "memory capacity MC-DCN-001", "CPU processing performance PP-DCN-001", "communication band CB-DCN-001 ", "processing load PL-DCN-001", "execution environment EE-DCN-001" of "controller DCN-001", {function block type 1:"arithmetic function 1", function block type 2: "arithmetic function 2", function block type 3:"input-output data transmitting-receiving function"}, etc., that are specified with respect to "controller DCN-001", the generator 13c generates "import file IF-DCN-001" as an import file enabling creation of the function blocks "arithmetic function 1A", "arithmetic function 2B", and "input-output data transmitting-receiving function C" that are arranged in "controller DCN-001" and stores the import file in the import file storage unit 12c. The generator 13c may output the generated "import file IF-DCN-001" to the transmitter 13d.

Using "function block type FBT-PS001", "function block number FBN-PS001", etc., that are specified with respect to "plant PS001" and "memory capacity MC-DCN-002", "CPU processing performance PP-DCN-002", "communication band CB-DCN-002", "processing load PL-DCN-002", "execution environment EE-DCN-002" of "controller DCN-002", {function block type 1: "arithmetic function 1"}, etc., that are specified with respect to "controller DCN-002", the generator 13c also generates "import file IF-DCN-002" as an import file enabling creation of the function block "arithmetic function 1B" that is arranged in "controller DCN-002" and stores the import file in the import file storage unit 12c. The generator 13c may output the generated "import file IF-DCN-002" to the transmitter 13d.

### 2-2-3-4. Transmitter 13d

The transmitter 13d transmits various types of information. Note that the transmitter 13d acquires various types of information stored in the storage unit 12 and transmits the various types of information. The import file transmitting process will be described below.

### Import File Transmitting Process

The transmitter 13d executes the import file transmitting process. For example, the transmitter 13d transmits the generated import file to each controller 30 and causes each controller 30 to create a function block. In the case where the engineer terminal device 20 that the engineer E of the system uses is online, each time an import file is generated, the transmitter 13d transmits the generated import file to each controller 30 and causes each controller 30 to create a function block. In the case where the engineer terminal device 20 that the engineer E of the system uses is offline, the transmitter 13d acquires an import file from the storage unit 12, transmits the transmits the import file to each controller 30, and causes each controller 30 to create a function block. The system herein is, for example, the plant.

A specific example will be described. When an online notification indicating an online state is received from the engineer terminal device 20 of "control system CS001" of "plant PS001", the transmitter 13d transmits "import file IF-DCN-001" that is output from the generator 13c together with a function block creation request to "controller DCN-001". When an online notification indicating an online state is received from the engineer terminal device 20 of "control system CS001" of "plant PS001", the transmitter 13d transmits "import file IF-DCN-002" that is output from the generator 13c together with a function block creation request to "controller DCN-002".

When an offline notification indicating an offline state is received from the engineer terminal device 20 of "control system CS001" of "plant PS001" or no online notification is received, the transmitter 13d transmits "import file IF-DCN-001" that is acquired from the import file storage unit 12c together with a function block creation request to "controller DCN-001". When an offline notification indicating an offline state is received from the engineer terminal device 20 of "control system CS001" of "plant PS001" or no online notification is received, the transmitter 13d transmits "import file IF-DCN-002" that is acquired from the import file storage unit 12c together with a function block creation request to "controller DCN-002".

When specification of a period of creation of a function block is received from the engineer terminal device 20, the transmitter 13d is able to transmit an import file in the specified period of creation and cause each controller 30 to create a function block.

### 2-3. Examples of Configuration of and Process performed by Engineer Terminal Device 20

Using FIG. 2, the examples of the configuration of and the process performed by the engineer terminal device 20 will be described. The engineer terminal device 20 is a terminal device that the engineer E that manages the plant uses and includes a control unit 21 and the communication unit 22.

### 2-3-1. Control Unit 21

The control unit 21 transmits various types of information. For example, according to an operation performed by the engineer E, the control unit 21 transmits the information model on the plant to the management server 10. According to an operation performed by the engineer E, the control unit 21 transmits timing of collection of device information, a request to create a function block, and a period of creating a function block, etc., to the management server 10. The control unit 21 receives various types of information.

### 2-3-2. Communication Unit 22

The communication unit 22 controls data commination with another device. For example, the communication unit 22 performs data communication with each communication device via a router, or the like. The communication unit 22 is able to perform data communication with a terminal device of an operator (not illustrated in the drawings).

### 2-4. Examples of Configuration of and Process performed by Control Device 30

Using FIG. 2, examples of the configuration and the process performed by the controller 30 will be described. The controller 30 is a device that controls a plurality of devices forming the control system and includes a control unit 31 and a communication unit 32.

### 2-4-1. Control Unit 31

The control unit 31 receives various types of information. For example, the control unit 31 receives an import file from the management server 10. The control unit 31 receives a request to transmit device information from the management server 10. The control unit 31 also receives a request to create a function block from the management server 10.

The control unit 31 transmits various types of information. For example, when a request to transmit device information is received from the management server 10, the control unit 31 transmits device information to the management server 10.

The control unit 31 executes various types of processing. For example, when a request to create a function block is received from the management server 10, the control unit 31 reads the import file and creates a function block.

### 2-4-2. Communication Unit 32

The communication unit 32 controls data communication with another device. For example, the communication unit 32 performs data communication with another communication device via a router, or the like. The communication unit 32 is able to perform data communication with the terminal device of the operator (not illustrated in the drawing).

### 2-5. Examples of Configuration of and Process performed by Field Device 40

Using FIG. 2, the examples of the configuration of and the process performed by the field device 40 will be described. The field device 40 is a measurement device, such as a sensor device, forming the control system and measures a sensor value and a process value. The field device 40 transmits the sensor value and the process value that are measured as measured values to the controller 30 forming the control system. The field device 40 is an operational device, such as an actuator, forming the control system and executes process control on opening or closing a valve according to a control signal that is received from the controller 30 forming the control system.

### 3. Flow of Process performed by Automation System 100

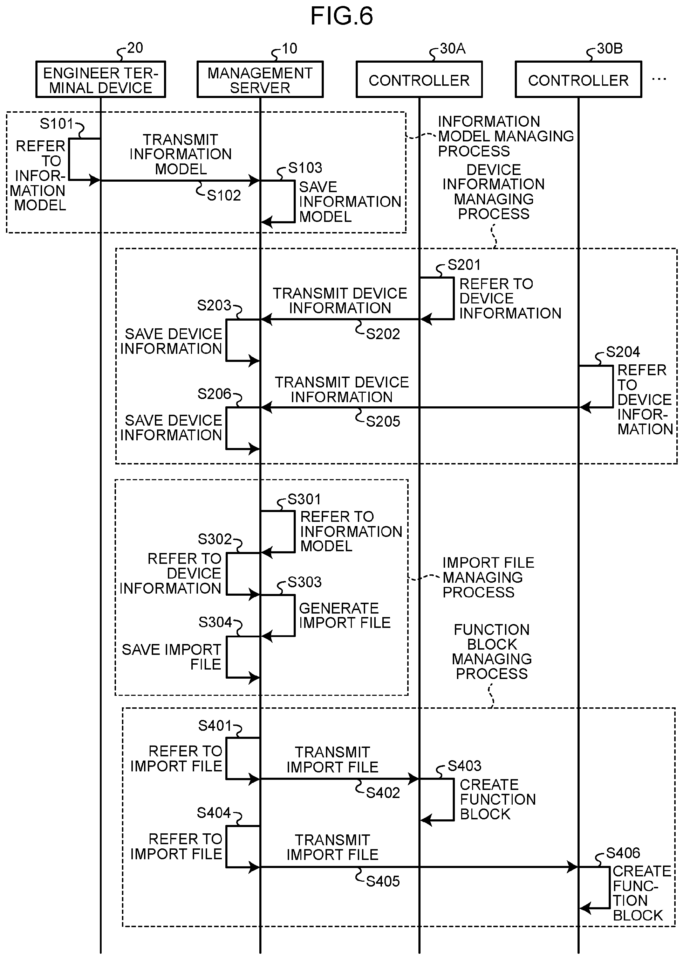

Using FIG. 6, the flow of the process performed by the automation system 100 according to the embodiment will be described. FIG. 6 is a sequence chart illustrating an example of the entire flow of the automation system 100 according to the embodiment. An information model managing process, a device information managing process, an import file managing process, and a function block managing process will be described.

### 3-1. Information Model Managing process

A flow of the information model managing process performed by the automation system 100 according to the embodiment will be described below. Note that it is also possible to execute the processes of steps S101 to S 103 described below in a different order. There may be a process to be omitted among the processes of steps S101 to S103 described below.

First of all, the engineer terminal device 20 executes an information model referring process (step S101). For example, according to an operation performed by the engineer E, the engineer terminal device 20 refers to the information model of the plant that is stored in a given storage unit or a database. Secondly, the engineer terminal device 20 executes an information model transmitting process (step S102). For example, according to an operation performed by the engineer E, the engineer terminal device 20 transmits the referred information model of the plant to the management server 10. Thirdly, the management server 10 executes an information model saving process (step S103). For example, the management server 10 saves the information model of the plant that is received from the engineer terminal device 20 in the information model storage unit 12a.

### 3-2. Device Information Managing process

The flow of the device information managing process performed by the automation system 100 according to the embodiment will be described below. The processes of steps S201 to S206 described below may be executed in a different order. There may be a process to be omitted among the processes of steps S201 to S206 described below.

First of all, the controller 30A executes a device information referring process (step S201). For example, in response to a request to transmit the device information on the management server 10, the controller 30A refers to the device information on the controller 30A that is saved in a given storage unit. Secondly, the controller 30A executes the device information transmitting process (step S202). For example, the controller 30A transmits the referred device information on the controller 30A to the management server 10. Thirdly, the management server 10 executes a device information saving process (step S203). For example, the management server 10 saves the device information on the controller 30A that is received from the controller 30A in the device information storage unit 12b.

Fourthly, the controller 30B executes the device information reference process (step S204). For example, in response to a request to transmit the device information on the management server 10, the controller 30B refers to the device information on the controller 30B that is saved in a given storage unit. Fifthly, the controller 30B executes the device information transmitting process (step S205). For example, the controller 30B transmits the referred device information on the controller 30B to the management server 10. Sixthly, the management server 10 executes the device information saving process (step S206). For example, the management server 10 saves the device information on the controller 30B that is received from the controller 30B in the device information storage unit 12b.

### 3-3. Import File Managing process

A flow of an import file managing process performed by the automation system 100 according to the embodiment will be described below. Note that it is also possible to execute the processes of steps S301 to S304 described below in a different order. There may be a process to be omitted among the processes of steps S301 to S304 described below.

First of all, the management server 10 executes the information model referring process (step S301). For example, the management server 10 refers to the information model of the plant that is saved in the information model storage unit 12a. Secondly, the management server 10 executes the device information referring process (step S302). For example, the management server 10 refers to the device information on each controller 30 that is saved in the device information storage unit 12b. Thirdly, the management server 10 executes the import file generating process (step S303). For example, based on the information model and the device information, the management server 10 generates an import file that enables generation of a function block that is arranged in each controller 30. Fourthly, the management server 10 executes an import file saving process (step S304). For example, the management server 10 saves the generated import file in the import file storage unit 12c.

### 3-4. Function Block Managing Process

A flow of the function block managing process performed by the automation system 100 according to the embodiment will be described below. Note that it is also possible to execute the processes of steps S401 to S406 described below in a different order. There may be a process to be omitted among the processes of steps S401 to S406 described below.

First of all, the management server 10 executes an import file referring process (step S401). For example, the management server 10 refers to the import file of the controller 30A that is saved in the import file storage unit 12c. Secondly, the management server 10 executes the import file transmitting process (step S402). For example, the management server 10 transmits the referred import file of the controller 30A to the controller 30A. Thirdly, the controller 30A executes the function block creating process (step S403). For example, the controller 30A reads the import file of the controller 30A that is received from the management server 10 and creates a function block.

Fourthly, the management server 10 executes the import file referring process (step S404). For example, the management server 10 refers to the import file of the controller 30B that is saved in the import file storage unit 12c. Fifthly, the management server 10 executes the import file transmitting process (step S405). For example, the management server 10 transmits the referred import file of the controller 30B to the controller 30B. Sixthly, the controller 30B executes the function block creating process (step S406). For example, the controller 30A reads the import file of the controller 30B that is received from the management server 10 and creates a function block.

### 4. Effect of Embodiment

Effects of the embodiment will be described at the end. Effects 1 to 9 corresponding to the process according to the embodiment will be described below.

### 4-1. Effect 1

First of all, in the process according to the above-described embodiment, the management server 10 receives information model on a system, collects device information on each controller 30 that executes control on the system from each controller 30, and generates an import file enabling creation of a function block corresponding to each controller 30 based on the received information model and the collected device information. For this reason, in the present process, it is possible to efficiently perform engineering that relates to function blocks of the automation system 100.

### 4-2. Effect 2

Secondly, in the process according to the above-described embodiment, the management server 10 transmits the generated import file to each controller 30 and causes each controller 30 to create a function block. For this reason, in the process, automatically arranging a function block that differs depending on each controller 30 makes it possible to efficiently perform engineering that relates to the function blocks in the automation system 100.

### 4-3. Effect 3

Thirdly, in the process according to the above-described embodiment, in the case where the engineer terminal device 20 that the engineer E of the system uses is online, every time an import file is generated, the management server 10 transmits the generated import file to each controller 30 and causes each controller 30 to generate a function block. For this reason, in the process, when the engineer terminal device 20 is online, arranging a different function block automatically in every controller 30 makes it possible to efficiently perform engineering that relates to the function blocks in the automation system 100.

### 4-4. Effect 4

Fourthly, in the process according to the above-described embodiment, the management server 10 saves the generated import file, in the case where the engineer terminal device 20 that the engineer E of the system uses is offline, acquires the saved import file, transmits the acquired import file to each controller 30, and causes each controller 30 to create a function block. For this reason, in the process, when the engineer terminal device 20 is offline, automatically arranging a function block that differs depending on each controller 30 in a freely-selected period makes it possible to efficiently perform engineering that relates to the function blocks in the automation system 100.

### 4-5. Effect 5

Fifthly, in the process according to the above-described embodiment, the management server 10 receives an information model containing at least one of function block information on a function block of the system and input-output information on input-output setting in the system from the engineer terminal device 20 that the engineer E of the system uses. For this reason, in the process, referring to function blocks that are structured for each system and the information on the input-output setting makes it possible to efficiently perform engineering that relates to the function blocks of the automation system 100.

### 4-6. Effect

Sixthly, in the process according to the above-described embodiment, the management server 10 collects, from each controller 30, device information containing at least one of hardware information on hardware of each controller 30, software information on software of each controller 30, and function block type information on a type of a function block of each controller 30. For this reason, in the process, referring to hardware, software, a type of a function block, etc., that differ depending on each controller 30 makes it possible to efficiently perform engineering that relates to the function blocks of the automation system 100.

### 4-7. Effect 7

Seventhly, in the process according to the above-described embodiment, the controller 30 complies with OTA, MTP, or NOA. For this reason, in the process, it is possible to efficiently perform engineering that relates to the function blocks of the automation system 100 of which standardization is progressing as international standards.

### 4-8. Effect 8

Eighthly, in the process according to the above-described embodiment, the controller 30 complies with OPC UA. For this reason, in the process, it is possible to efficiently perform engineering that relates to the function blocks of the automation system 100 complying with OPC UA.

### 4-9. Effect 9

Ninthly, in the process according to the above-described embodiment, the controller 30 executes control on the plant. For this reason, in the process, it is possible to efficiently perform engineering that relates to the function blocks of the automation system 100 of the plant that requires safety.

### 5. System

The process procedures, the control procedure, the specific names, and the information including various types of data and parameters that are presented in the description above and the drawings are changeable freely except as otherwise provided.

Each of the components of each of the devices illustrated in the drawings is of functional ideas and need not necessarily be configured physically as illustrated in the drawings. In other words, specific modes of distribution and integration of each device are not limited to those illustrated in the drawings. In other words, all or part of the devices can be configured by being distributed or integrated functionally or physically in any unit according to various types of load, usage, etc.

Furthermore, all or any part of each processing function that is implemented in each device can be implemented by the CPU and using a program that is analyzed and executed or may be implemented as hardware using a wired logic.

### 6. Hardware

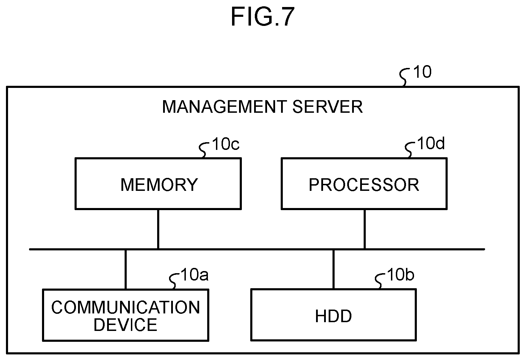

An example of a hardware configuration of the management server 10 that is the information processing apparatus will be described. Note that another device, such as the controller 30, may have a similar hardware configuration. FIG. 7 is a diagram illustrating the example of the hardware configuration according to the embodiment. As illustrated in FIG. 7, the management server 10 includes a communication device 10a, a hard disk drive (HDD) 10b, a memory 10c, and a processor 10d. The units illustrated in FIG. 7 are connected mutually via a bus, or the like.

The communication device 10a is a network interface card, or the like, and communicates with another server. The HDD 10b stores a program that causes the functions illustrated in FIG. 2 to operate.

The processor 10d reads the program for executing the same process as that of each of the processing units illustrated in FIG. 2 from the HDD 10b, or the like, and loads the program into the memory 10c, thereby executing the process of implementing each of the functions illustrated in FIG. 2, and the like. For example, the process implements the same function as that of each of the functions that the management server 10 includes. Specifically, the processor 10d reads the program with the same functions as those of the receiver 13a, the collecting unit 13b, the generator 13c, the transmitter 13d, etc., from the HDD 10b, or the like. The processor 10d executes the process that executes the same processing as that performed by the receiver 13a, the collecting unit 13b, the generator 13c, the transmitter 13d, etc.

As described above, the management server 10 reads and executes a program, thereby operating as a device that executes various types of processing methods. The management server 10 may read the above-described program from a recording medium using a medium reading device and execute the read program, thereby enabling the same functions as those of the embodiment. Note that the program herein is not limited to being executed by the management server 10. For example, the present disclosure is similarly applicable to the case where another computer or a server executes the program or the case where the computer and the server execute the program cooperatively.

The program according to the embodiment can be distributed via a network, such as the Internet. The program can be recorded in a computer-readable recording medium, such as a hard disk, a flexible disk (FD), a CD-ROM, a magneto-optical disk (MO), or a digital versatile disc (DVD), can be read by a computer from the recording medium, and thus can be executed.

According to the disclosure, there is an effect that it is possible to perform engineering that relates to function blocks of an automation system efficiently.

## Claims

1. An information processing apparatus (10) comprising:
a receiver (13a) that receives an information model obtained by structuring information on a system;
a collecting unit (13b) that collects device information on each controller (30) that executes control on the system from the each controller (30); and
a generator (13c) that generates an import file enabling creation of a function block corresponding to the each controller (30) based on the received information model and the collected device information.

2. The information processing apparatus (10) according to claim 1, further comprising a transmitter (13d) that transmits the generated import file to the each controller (30) and causes the each controller (30) to create the function block.

3. The information processing apparatus (10) according to claim 2, wherein, in a case where a manager terminal device (20) that a manager of the system uses is online, each time the import file is generated, the transmitter transmits the import file generated to the each controller (30) and causes the each controller (30) to create the function block.

4. The information processing apparatus (10) according to claim 2, further comprising a storage unit (12) that stores the import file that is generated,
wherein, in a case where a manager terminal device that a manager of the system uses is offline, the transmitter (13d) acquires the import file from the storage unit (12), transmits the acquired import file to the each controller (30), and causes the each controller (30) to create the function block.

5. The information processing apparatus (10) according to any one of claims 1 to 4, wherein the receiver (13a) receives an information model containing at least one of function block information on a function block of the system or input-output information on input-output setting in the system from a manager terminal device (20) that a manger of the system uses.

6. The information processing apparatus (10) according to any one of claims 1 to 5, wherein the collecting unit (13b) collects, from the each controller (30), device information containing at least one of hardware information on hardware of the each controller (30), software information on software of the each controller (30), or function block type information on a type of the function block of the each controller (30).

7. The information processing apparatus (10) according to any one of claims 1 to 6, wherein the controller (30) complies with OPA (Open Process Automation), MTP (Module Type Package), or NOA (NAMUR Open Architecture).

8. The information processing apparatus (10) according to any one of claims 1 to 7, wherein the controller (30) complies with OPC UA (Open Platform Communications Unified Architecture).

9. The information processing apparatus (10) according to any one of claims 1 to 8, wherein the controller (30) executes control on a plant.

10. An information processing method of executing, by a computer (10), a process comprising:
receiving an information model obtained by structuring information on a system;
collecting device information on each controller (30) that executes control on the system from the each controller (30); and
generating an import file for creation of a function block corresponding to the each controller (30) based on the received information model and the collected device information.

11. An information processing program that causes a computer (10) to execute a process comprising:
receiving an information model obtained by structuring information on a system;
collecting device information on each controller (30) that executes control on the system from the each controller (30); and
generating an import file for creation of a function block corresponding to the each controller (30) based on the received information model and the collected device information.
